# FASCICULE DE BREVET EUROPEEN

(11) **EP 1 159 522 B1**
(45) Date de publication et mention de la délivrance du brevet: **27.11.2002**
(21) Numéro de dépôt: 00909354.3
(22) Date de dépôt: 10.03.2000
(51) Int. Cl.: F02D 41/06, G01L 27/02, G01D 18/00

(54) **PROCEDE DE DETERMINATION DE LA PRESSION REGNANT DANS LA RAMPE D'INJECTION DU CARBURANT D'UN MOTEUR A COMBUSTION INTERNE ET DISPOSITIF CORRESPONDANT**
VERFAHREN UND VORRICHTUNG ZUR DRUCKERFASSUNG IM BRENNSTOFFVERTEILER EINER BRENNKRAFTMASCHINE
METHOD FOR DETERMINING THE PRESSURE PREVAILING IN A FUEL INJECTION RAMP OF AN INTERNAL COMBUSTION ENGINE AND CORRESPONDING DEVICE

(30) Priorité: 12.03.1999 FR 9903084
(43) Date de publication de la demande: 05.12.2001
(73) Titulaire: Siemens VDO Automotive S.A.S., 31036 Toulouse cedex 01 (FR)
(72) Inventeur: ATANASYAN, Alain, F-31820 Pibrac (FR); FERRIE, Jean-Paul, F-31270 Cugnaux (FR)
(74) Mandataire: Berg, Peter, Dipl.-Ing.
(86) Numéro de dépôt international: EP0002147
(87) Numéro de publication internationale: WO00055486

(56) Documents cités:
- EP-A- 0 777 042
- US-A- 5 834 624

## Description

La présente invention concerne un procédé de détermination de la pression régnant dans la rampe d'injection de carburant d'un moteur à combustion interne et un dispositif correspondant. Plus particulièrement, il s'agit d'estimer la pression en carburant lorsque le capteur de pression travaille dans des conditions limites, notamment au démarrage.

Il est déjà connu de mesurer la pression régnant dans la rampe d'injection de carburant d'un moteur à combustion interne. A cet effet, un capteur de pression est mis en place dans cette rampe d'injection.

Dans le cadre d'un moteur à injection indirecte classique, cette pression d'injection est relativement faible, de l'ordre de 3 à 5 bars. Par contre, dans le cas d'un moteur à injection directe, cette pression est importante et varie généralement de 30 à 120 bars. Bien entendu, des capteurs de pression spécifiquement adaptés pour mesurer de fortes pressions sont utilisés. A ces fortes pressions ces capteurs présentent en général une précision de l'ordre de ± 3 %, ce qui est suffisant pour piloter correctement la quantité de carburant à injecter dans le cylindre du moteur.

Cependant, lors du démarrage, la rampe d'injection n'est pas immédiatement alimentée en carburant à une pression de 30 à 120 bars. En effet, ces pressions sont obtenues par une pompe mécanique entraînée par le moteur et ne sont atteintes que lorsque la pompe a une vitesse de rotation de l'ordre de 200 à 300 tours/mn. Cette vitesse de rotation n'est pas atteinte immédiatement lors du démarrage. En fait, entre la phase de démarrage du moteur (0 tour/mn) et la phase de mise en pression (200 à 300 tours/mn), la pression dans la rampe d'injection varie et augmente progressivement en fonction de la vitesse de rotation du moteur du véhicule.

Pour aider le démarrage du véhicule, il est connu d'utiliser une pompe de «gavage» dont le but est d'alimenter le moteur avec un carburant présentant une pression d'au moins 3 bars à 5 bars lors du démarrage. Cette pompe de gavage améliore le démarrage du moteur mais ne permet pas au capteur de pression de fonctionner avec une bonne précision lors du démarrage. En effet, le capteur de pression n'est pas capable d'indiquer la pression réelle dans la rampe d'injection lorsque celle ci varie de 3 à 30 bars. Ce capteur est conçu pour travailler avec une bonne précision entre 30 et 120 bars, mais sous faible pression, il présente des erreurs considérables de l'ordre de ± 200%. Il est donc impossible de se fier aux valeurs de pression indiquées par le capteur tant que la pression est inférieure à 30 bars. Or, comme la régulation de la pression dans la rampe d'injection est effectuée par le contrôle électronique de la fuite d'un régulateur proportionnel lui-même bouclé sur la mesure donnée par le capteur de pression, si la mesure du capteur est erronée et que le temps d'ouverture des injecteurs est corrigé en fonction de la pression d'alimentation afin d'en contrôler le débit maximum, la régulation de la pression de carburant est impossible. Il en est de même du contrôle de la qualité du démarrage.

En outre, il n'est pas possible d'établir une loi d'évolution typique de la pression régnant dans un système d'alimentation en carburant donné lors de la phase de démarrage, car celle ci varie en fonction de l'évolution du régime moteur et n'est jamais la même.

Le fait de ne pouvoir déterminer avec précision l'évolution de la pression de carburant lors du démarrage entraîne de nombreux inconvénients, à savoir des démarrages plus ou moins longs, des variations de performances au démarrage, des calages après départ....etc.

Le but de la présente invention est de pallier l'ensemble de ces inconvénients et notamment d'estimer l'évolution de la pression en carburant lors du démarrage d'un moteur à injection directe.

A cet effet, la présente invention concerne un procédé de détermination de la pression régnant dans une rampe d'injection de carburant d'un moteur à combustion interne, le dit moteur étant notamment équipé :
- d'un capteur de pression monté dans la rampe d'injection, le dit capteur étant adapté pour fonctionner avec une précision maximum entre une limite inférieure et une limite supérieure de pression,
- d'une pompe de mise en pression du carburant,
- d'une pompe de gavage alimentant le circuit en carburant à une pression de gavage inférieure à la limite inférieure du domaine de précision maximum du capteur et,
- d'un régulateur de pression, le dit procédé étant caractérisé en ce qu'il consiste à :
   **a** - alimenter la pompe de gavage en carburant, de sorte que la rampe d'injection soit alimentée en carburant à la pression de gavage,
   **b** - mesurer la pression régnant dans la rampe d'injection à l'aide du capteur de pression, lorsque le carburant est à la pression de gavage,
   **c** - en déduire le pourcentage d'erreur du capteur de pression, et mémoriser cette erreur,
   **d** - établir une loi de décroissance linéaire de cette erreur entre la pression de gavage et la limite inférieure du domaine de précision maximum du capteur et,
   **e** - en déduire, pour chaque valeur de pression mesurée par le capteur entre la pression de gavage et la limite inférieure de pression, la valeur réelle de la pression du carburant dans la rampe d'injection, pour corriger la masse de carburant injecté.

Ainsi, la connaissance de l'erreur de mesure du capteur à la pression de gavage permet d'estimer la pression réelle dans la rampe d'injection lorsque cette pression est comprise entre la pression de gavage et la limite inférieure du domaine de précision du capteur. En effet, la linéarisation de cette erreur entre la pression de gavage et la limite inférieure de pression permet d'établir la loi de calcul de la pression réelle (loi de correction de la mesure du capteur) entre ces deux valeurs de pressions. Ainsi, les mesures réalisées par le capteur en dehors de sa zone de précision maximum sont tout de même exploitables, après application de la loi de correction déterminée par linéarisation.

Avantageusement, un tel procédé d'estimation de la pression peut être mis en oeuvre au démarrage du véhicule et/ou à l'arrêt de celui-ci. Ainsi, par exemple, la valeur de l'erreur déterminée au démarrage peut être confirmée à l'arrêt.

De même, la loi de correction de la mesure du capteur peut être déterminée lors de la première mise en route. A chaque arrêt ultérieur, il suffit alors de vérifier que l'erreur de mesure à la pression de gavage est toujours la même. Dans ce cas, il n'est pas nécessaire de refaire la mesure de cette erreur à chaque démarrage.

La présente invention concerne aussi un dispositif selon la revendication 5.

D'autres objets, et avantages de la présente invention ressortiront d'ailleurs de la description qui suit à titre d'exemple non limitatif et en référence aux dessins annexés dans lesquels :
- la figure 1 est une vue schématique représentant le dispositif d'alimentation en carburant d'une rampe d'injection,
- la figure 2 est une vue schématique du gabarit d'incertitude d'un capteur de pression, et
- la figure 3 est une vue schématique montrant les différentes étapes du procédé selon l'invention.

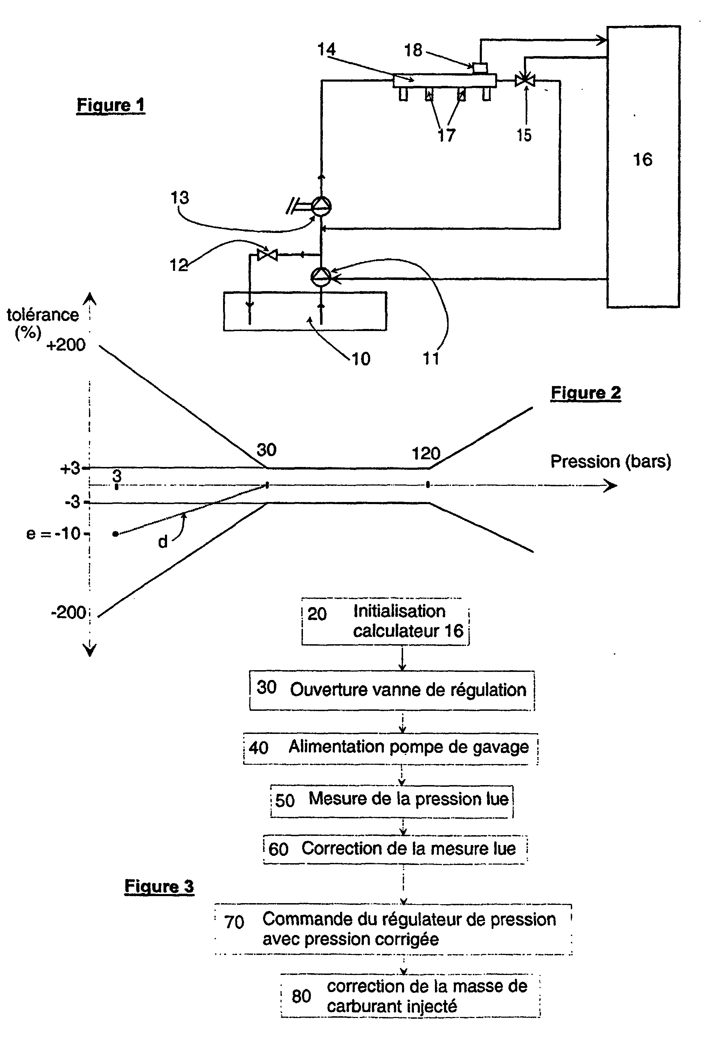

On rappellera tout d'abord, en référence à la figure 1, la constitution d'un système d'alimentation en carburant d'un moteur à combustion interne..

Un réservoir 10 contient le carburant destiné à alimenter le moteur. Ce carburant est prélevé par une pompe de gavage 11. Cette pompe est associée à un régulateur de gavage 12 qui maintient la pression à la sortie de la pompe à une valeur de 3 bars (par exemple). En fait, les pompes de gavage habituellement utilisées maintiennent le carburant à une pression fixe entre 3 et 5 bars.

Le surplus de carburant est renvoyé vers le réservoir par le régulateur de gavage 12.

Le carburant est ensuite aspiré par une pompe mécanique 13 de mise en pression. Cette pompe assure une pression de 30 à 120 bars dans le circuit d'alimentation de la rampe d'injection lorsqu'elle est entraînée par le moteur à une vitesse suffisante (de l'ordre de 200 à 300 tours/mn). A la sortie de cette pompe, le carburant est entraîné vers la rampe d'injection 14. Un régulateur d'injection 15 maintient la pression dans la rampe à la valeur désirée (30 à 120 bars par exemple) selon le point de fonctionnement du moteur. L'excès de carburant est renvoyé à l'amont de la pompe 13 et en aval de la pompe de gavage 11.

Une unité centrale 16 de commande moteur se charge de commander le fonctionnement de la pompe de gavage et du régulateur 15 et de piloter les injecteurs 17 en fonction des mesures effectuées par un capteur de pression 18 situé dans la rampe d'injection.

Ce capteur d'injection (figure 2) est adapté pour mesurer la pression entre 30 et 120 bars (par exemple) avec une bonne précision (par exemple moins de 3% d'erreur). Par contre lorsque la pression à mesurer se situe en dessous de sa limite inférieure de précision (30 bars dans le cas représenté), la précision de sa mesure est fortement perturbée. Cette imprécision peut même être de l'ordre de ± 200 %.

Le problème que vise à résoudre l'invention est explicité ci-après.

Au démarrage du moteur, la pression à l'intérieur de la rampe d'injection varie de la pression de gavage (3 bars) à la limite inférieure de précision (30 bars). Or, le capteur utilisé ne donne pas de mesures fiables dans cette gamme de pression. Cependant, les mesures du capteur de pression doivent être prises en compte puisque c'est à l'aide de celles-ci que l'on réalise la commande des injecteurs.

Comme le montre la figure 2, le domaine de précision d'un capteur de pression est en général de 30 bars à 120 bars.

Selon l'invention, la solution consiste à mesure la valeur de la pression régnant dans la rampe d'injection lorsque cette pression est égale à la pression de gavage. Dans le cas présent, cette pression de gavage est de l'ordre de 3 bars. On compare ensuite la pression mesurée par le capteur de pression à la pression de gavage connue.

Il est à noter que pour un système donné la pression de gavage est fixe et connue.

Cette comparaison permet d'établir le pourcentage d'erreur (e) du capteur en question. Par exemple sur la figure 2, ce pourcentage est de 10 %.

On réalise ensuite une linéarisation de l'erreur entre la pression de gavage et la limite inférieure du domaine de précision. Dans le cas présent, l'erreur est de 10 % à 3 bars et la linéarisation consiste à dire qu'elle sera de zéro % à 30 bars (limite inférieure du domaine de précision du capteur).

Ce faisant, on définit une courbe d (en pointillés à la figure 2) donnant le pourcentage d'erreur en fonction de la mesure du capteur. Il suffit de corriger les valeurs de pressions mesurées par le capteur à l'aide de cette courbe de correction pour déterminer la valeur réelle de la pression.

L'établissement de la loi de correction du capteur est effectué de la manière suivante (figure 3).

Tout d'abord (étape 20), l'unité centrale 16 est initialisée dès que la clef de contact est mise en place dans la serrure de contact. Le régulateur de pression 15 du système est maintenu à pleine ouverture (étape 30) et la pompe de gavage 11 est immédiatement alimentée (étape 40). On lit alors la valeur donnée par le capteur de pression 18 (étape 50). Cette valeur doit être égale à la pression de gavage. On appelle (e) le pourcentage de l'erreur du capteur (la valeur absolue de la différence entre la valeur mesurée par le capteur et la pression de gavage divisée par la valeur lue). On établit la loi de correction (étape 60) de la mesure en linéarisant le pourcentage d'erreur pour une pression variant de la pression de gavage à la limite inférieure de pression. La commande du régulateur de pression 15 est alors effectuée en se basant sur la pression corrigée (étape 70). La correction de la masse de carburant à injecter (étape 80) est alors effectuée en se basant sur la pression corrigée déterminée à l'étape 70. Ainsi le calculateur de commande du moteur envoie à chaque cylindre la quantité de carburant nécessaire, en se basant sur la pression de carburant corrigée et non sur la valeur erronée donnée par le capteur de pression 18.

Bien entendu, lorsque la pression dans la rampe d'injection atteint la valeur de la limite inférieure du domaine de précision (30 bars), il n'est plus nécessaire d'appliquer de correction à la valeur mesurée. Le capteur est, en effet, considéré comme « juste» lorsque la pression mesurée est supérieure à la limite inférieure (30 bars).

Ainsi, le procédé selon l'invention consiste à déterminer la pression régnant dans une rampe d'injection de carburant d'un moteur à combustion interne, le dit moteur étant notamment équipé :
- d'un capteur de pression 18 monté dans la rampe d'injection 14, le dit capteur étant adapté pour fonctionner avec une précision maximum entre une limite inférieure (30 bars) et une limite supérieure (120 bars) de pression,
- d'une pompe 13 de mise en pression du carburant,
- d'une pompe de gavage 11 alimentant le circuit en carburant à une pression de gavage (3 bars) inférieure à la limite inférieure du domaine de précision maximum du capteur et,
- d'un régulateur de pression 15, le dit procédé étant caractérisé en ce qu'il consiste à :
   **a** - alimenter la pompe de gavage 11 en carburant de sorte que la rampe d'injection 14 soit alimentée en carburant à la pression de gavage,
   **b** - mesurer la pression régnant dans la rampe d'injection 14 à l'aide du capteur de pression 18 lorsque le carburant est à la pression de gavage,
   **c** - en déduire le pourcentage d'erreur (e) du capteur de pression et mémoriser cette erreur,
   **d** - établir une loi de décroissance linéaire de cette erreur entre la pression de gavage et la limite inférieure du domaine de précision maximum du capteur et,
   **e** - en déduire, pour chaque valeur de pression mesurée par le capteur entre la pression de gavage et la limite inférieure de pression, la valeur réelle de la pression du carburant dans la rampe d'injection pour corriger la masse de carburant injecté.

On notera en variante que le procédé selon l'invention est mis en oeuvre au démarrage du véhicule et que le pourcentage d'erreur à la pression de gavage est confirmé à l'arrêt du véhicule, en appliquant une seconde fois l'ensemble des étapes a à c.

En variante, ce procédé peut être mis en oeuvre lors de la première mise en marche du véhicule. Dans ce cas, la valeur de l'erreur à la pression de gavage est confirmée à chaque arrêt du moteur. Si cette valeur se modifie au cours du temps, le procédé selon l'invention peut être mis en oeuvre au démarrage suivant de manière à établir une nouvelle loi de correction de la pression mesurée.

La présente invention concerne également un dispositif mettant en oeuvre le procédé ci-dessus décrit, à savoir un dispositif de mesure de la pression comportant;
- des moyens de mesure 18 de la pression régnant dans la rampe d'injection 14,
- des moyens de comparaison 16 entre la pression mesurée et la pression de gavage adaptés pour déterminer l'erreur (e) de mesure lorsque la pression dans la rampe d'injection est la pression de gavage,
- des moyens de mémorisation 16 de l'erreur de mesure à la pression de gavage et,
- des moyens de détermination 16 d'une loi de correction de la pression mesurée lorsque celle-ci varie de la pression de gavage à la limite inférieure de pression du domaine de précision du capteur.

Bien entendu, la présente invention n'est pas limitée aux modes de réalisation décrits et représentés et englobe toute variante à la portée de l'homme de l'art. Ainsi, cette estimation de la valeur de la pression pour des basses pressions en dehors du domaine de précision du capteur peut être appliquée à tout système comportant une rampe d'alimentation (essence ou diesel).

## Revendications

1. Procédé de détermination de la pression régnant dans une rampe d'injection (14) de carburant d'un moteur à combustion interne, le dit moteur étant notamment équipé :
- d'un capteur de pression (18) monté dans la rampe d'injection, le dit capteur étant adapté pour fonctionner avec une précision maximum entre une limite inférieure et une limite supérieure de pression,
- d'une pompe de mise en pression (13) du carburant,
- d'une pompe de gavage (11) alimentant le circuit en carburant à une pression de gavage inférieure à la limite inférieure du domaine de précision maximum du capteur et,
- d'un régulateur de pression (15), le dit procédé étant **caractérisé en ce qu'**il consiste à :
**a -** alimenter la pompe de gavage (11) en carburant, de sorte que la rampe d'injection soit alimentée en carburant à la pression de gavage,
**b -** mesurer la pression régnant dans la rampe d'injection (14) à l'aide du capteur de pression (18), lorsque le carburant est à la pression de gavage,
**c -** en déduire le pourcentage d'erreur (e) du capteur de pression, et mémoriser cette erreur,
**d** - établir une loi de décroissance linéaire de cette erreur entre la pression de gavage et la limite inférieure du domaine de précision maximum du capteur et,
**e** - en déduire, pour chaque valeur de pression mesurée par le capteur entre la pression de gavage et la limite inférieure de pression, la valeur réelle de la pression du carburant dans la rampe d'injection, pour corriger la masse de carburant injecté.

2. Procédé selon la revendication 1, **caractérisé en ce qu'**il est mis en oeuvre au démarrage du véhicule et **en ce que** le pourcentage d'erreur (e) à la pression de gavage est confirmé, à l'arrêt du véhicule, en appliquant une seconde fois l'ensemble des étapes a à c.

3. Procédé selon la revendication 1, **caractérisé en ce qu'**il est mis en oeuvre à chaque arrêt du moteur.

4. Procédé selon l'une quelconque des revendications précédentes, **caractérisé en ce que** la pression de gavage est de l'ordre de 3 à 5 bars et la limite inférieure est de l'ordre de 30 bars.

5. Dispositif de mesure de la pression régnant dans une rampe d'injection (14) de carburant d'un moteur à combustion interne mettant en oeuvre le procédé selon l'une quelconque des revendications précédentes, le dit moteur étant notamment équipé :
- d'un capteur de pression (18) monté dans la rampe d'injection, le dit capteur étant adapté pour fonctionner avec une précision maximum entre une limite inférieure et une limite supérieure de pression,
- d'une pompe de mise en pression (13) du carburant,
- d'une pompe de gavage (11) alimentant le circuit en carburant à une pression de gavage inférieure à la limite inférieure du domaine de précision maximum du capteur et,
- d'un régulateur de pression (15),
le dit dispositif étant **caractérisé en ce qu'**il comporte :
- des moyens de mesure de la pression régnant dans la rampe d'injection,
- des moyens de comparaison entre la pression mesurée et la pression de gavage adaptés pour déterminer l'erreur de mesure lorsque la pression dans la rampe d'injection est la pression de gavage,
- des moyens de mémorisation de l'erreur de mesure à la pression de gavage et,
- des moyens de détermination d'une loi de correction de la pression mesurée lorsque celle-ci varie de la pression de gavage à la limite inférieure de pression du domaine de précision du capteur.

## Patentansprüche

1. Verfahren zum Bestimmen des Drucks, der in einem Kraftstoffverteiler (14) einer Brennkraftmaschine herrscht, welche insbesondere ausgerüstet ist mit:
- einem Druckaufnehmer (18), der in dem Kraftstoffverteiler angeordnet ist, wobei der Druckaufnehmer so ausgebildet ist, dass er mit einer maximalen Genauigkeit zwischen einer unteren Druckgrenze und einer oberen Druckgrenze arbeitet,
- einer Pumpe (13) zur Druckbeaufschlagung des Kraftstoffs,
- einer Ladepumpe (11), die den Kraftstoffkreis mit einem Ladedruck speist, der kleiner ist als die untere Druckgrenze des maximalen Genauigkeitsbereichs des Druckaufnehmers, und
- einem Druckregler (15), wobei das Verfahren **dadurch gekennzeichnet ist, dass** es aus folgenden Schritten besteht:
a - Beaufschlagung der Ladepumpe (11) in der Weise, dass der Kraftstoffverteiler mit Kraftstoff unter Ladedruck versorgt wird,
b - Messen des Drucks in dem Kraftstoffverteiler (14) mit Hilfe des Druckaufnehmers (18), während der Kraftstoff unter Ladedruck steht,
c - Ableiten des Prozentsatzes (e) des Fehlers des Druckaufnehmers aus obigem und Speichern dieses Fehlers,
d - Aufstellen eines Gesetzes für die lineare Abnahme dieses Fehlers zwischen dem Ladedruck und der unteren Grenze des maximalen Genauigkeitsbereiches des Aufnehmers, und
e - Ableiten des Istwertes des Kraftstoffdrucks im Kraftstoffverteiler aus obigem für jeden von dem Aufnehmer gemessenen Druckwert zwischen dem Ladedruck und der unteren Druckgrenze zum Korrigieren der eingespritzten Kraftstoffmenge.

2. Verfahren nach Anspruch 1, **dadurch gekennzeichnet, dass** es beim Start des Fahrzeuges durchgeführt wird und dass der Prozentsatz (e) des Fehlers unter Ladedruck beim Halt des Fahrzeuges verifiziert wird, indem die Gesamtheit der Schritte (a) bis (c) ein zweites Mal durchgeführt wird.

3. Verfahren nach Anspruch 1, **dadurch gekennzeichnet, dass** es bei jedem Halt der Brennkraftmaschine durchgeführt wird.

4. Verfahren nach einem der vorhergehenden Ansprüche, **dadurch gekennzeichnet, dass** der Ladedruck in der Größenordnung von 3 bis 5 bar und die untere Druckgrenze in der Größenordnung von 30 bar liegt.

5. Vorrichtung zum Messen des Drucks, der in einem Kraftstoffverteiler (14) einer Brennkraftmaschine herrscht, die das Verfahren nach einem der vorhergehenden Ansprüche durchführt, wobei die Brennkraftmaschine insbesondere versehen ist mit:
- einem Druckaufnehmer (18), der in dem Kraftstoffverteiler angeordnet ist, wobei der Druckaufnehmer so ausgebildet ist, dass er mit einer maximalen Genauigkeit zwischen einer unteren Druckgrenze und einer oberen Druckgrenze arbeitet,
- einer Pumpe (13) zur Druckbeaufschlagung des Kraftstoffs,
- einer Ladepumpe (11), die den Kraftstoffkreis mit einem Ladedruck speist, der kleiner ist als die untere Druckgrenze des maximalen Genauigkeitsbereichs des Druckaufnehmers, und
- einem Druckregler (15),
wobei die Vorrichtung **dadurch gekennzeichnet ist, dass** sie aufweist:
- Mittel zum Messen des Drucks im Kraftstoffverteiler,
- Mittel für einen Vergleich zwischen dem gemessenen Druck und dem Ladedruck, die in der Lage sind, den Messfehler zu bestimmen, wenn der Druck im Kraftstoffverteiler der Ladedruck ist,
- Mittel zum Speichern des Messfehlers unter Ladedruck, und
- Mittel zum Bestimmen eines Gesetzes zur Korrektur des gemessenen Drucks, wenn dieser von dem Ladedruck an der unteren Druckgrenze des Genauigkeitsbereichs des Aufnehmers abweicht.

## Claims

1. Method of determining the pressure obtaining in a fuel injection rail (14) of an internal combustion engine, said engine being specifically equipped with:
- a pressure sensor (18) mounted in the injection rail, said sensor being designed to operate at maximum accuracy between a lower and an upper pressure limit,
- a pump (13) for pressurising the fuel,
- a booster pump (11) supplying the circuit with fuel at a boost pressure below the lower limit of the maximum accuracy range of the sensor, and
- a pressure regulator (15),
said method being **characterised in that**:
**a -** the booster pump (11) is supplied with fuel such that the injection rail (14) is supplied with fuel at boost pressure,
**b -** the pressure obtaining in the injection rail (14) is measured with the pressure sensor (18) when the fuel is at boost pressure,
**c -** from this, the percentage error (e) of the pressure sensor is deduced and this error is memorised,
**d** - a law of linear decrease of this error between the boost pressure and the lower limit of the maximum accuracy range of the sensor is established, and
**e** - from this, for each pressure value measured by the sensor between the boost pressure and the lower pressure limit, the actual value of the pressure of the fuel in the injection rail is deduced to correct the amount of fuel injected.

2. Method according to Claim 1, **characterised in that** it is used when the vehicle is started and that the percentage error (e) at boost pressure is confirmed when the vehicle is switched off, by re-applying all the steps a to c.

3. Method according to Claim 1, **characterised in that** it is used each time the engine is switched off.

4. Method according to one of the preceding claims, **characterised in that** the boost pressure is of the order of 3 to 5 bar and the lower limit is of the order of 30 bar.

5. Arrangement for measuring the pressure obtaining in a fuel injection rail (14) of an internal combustion engine using the method according to one of the preceding claims, said engine being specifically equipped with:
- a pressure sensor (18) mounted in the injection rail, said sensor being designed to operate at maximum accuracy between a lower and an upper pressure limit,
- a fuel pressurising pump (13),
- a booster pump (11) supplying the circuit with fuel at a boost pressure below the lower limit of the maximum accuracy range of the sensor, and
- a pressure regulator (15),
said arrangement being **characterised in that** it comprises:
- means of measuring the pressure obtaining in the injection rail,
- means of comparing the measured pressure and the boost pressure and designed to determine the measurement error when the pressure in the injection rail is the boost pressure,
- means of memorising the measurement error at boost pressure, and
- means of determining a correction law for the measured pressure when the latter is at variance from the boost pressure at the lower limit of the pressure sensor's accuracy range.
